# EUROPEAN PATENT SPECIFICATION

(11) **EP 1 345 498 B1**
(45) Date of publication and mention of the grant of the patent: **24.05.2006**
(21) Application number: 01985415.7
(22) Date of filing: 14.12.2001
(51) Int. Cl.: A23G 1/00, A23G 3/00, A23G 3/20, A23G 1/20, A23G 1/21, A23G 3/02

(54) **SHELL-MOULDED FAT-CONTAINING CONFECTIONERY PRODUCTS WITH VISCOUS FILLING**
SCHALENARTIG GEFORMTES FETT-ENTHALTENDES KONFEKTPRODUKT MIT VISKOSER FÜLLUNG
PRODUITS DE CONFISERIE, MOULES SOUS LA FORME DE COQUILLES, CONTENANT DES MATIERES GRASSES ET UNE GARNITURE VISQUEUSE

(30) Priority: 21.12.2000 GB 0031308
(43) Date of publication of application: 24.09.2003
(73) Proprietor: SOCIETE DES PRODUITS NESTLE S.A., 1800 Vevey (CH)
(72) Inventor: WHITEHOUSE, Andrew Steve, Harrogate HG2 8AY (GB); WALKER, John Howard, Haxby, York YO3 3ZU (GB); CRAGGS, Richard Johnson, Norton, Malt on, N. Yorks Y017 9EF (GB)
(74) Representative: Thomas, Alain
(86) International application number: PCT/EP2001/014863
(87) International publication number: WO 2002/049447

(56) References cited:
- EP-A- 0 668 021
- EP-A- 0 775 448
- EP-A- 1 064 852
- WO-A-01/78519
- DE-A- 1 782 652
- GB-A- 769 092
- GB-A- 2 026 378
- GB-A- 2 159 688
- US-A- 4 630 428
- US-A- 5 458 275
- ANON.: "Rose-Theegarten wraps it up" CONFECTIONERY PRODUCTION, vol. 57, no. 6, 1991, pages 434-435, XP002201928
- ANON.: "Two moulding processes are now possible for small chocolate items" ZUCKER- UND SÜSSWARENWIRTSCHAFT, vol. 38, no. 10, 1985, pages 420-422, XP008004105

## Description

The present invention relates to shell-moulded fat-containing confectionery products such as chocolate, with a viscous confectionery filling such as caramel or toffee having a size smaller than a normal bite-size product.

Bite-sized confectionery products usually have a weight of about 3-6g and a volume of about 3-6cm³. Many chocolate-coated bite-sized confectionery products contain a centre which contrasts with the chocolate in terms of taste and texture, e.g. caramel, fondant or praline and can be made on a shell moulding line. This method comprises a step of depositing into a mould by injecting a metered amount of liquid chocolate by means of a piston through a nozzle into the mould. Then, the mould is passed through a short cooling tunnel so that only the outside sets. The mould is then turned upside down and vibrated. The chocolate initially sets near the mould wall, but remains liquid in the centre. The mould is then inverted whereupon the liquid part of the chocolate runs out leaving the outer shell. Afterwards the mould is turned back over and the centre material is filled into the chocolate shell. Finally, a layer of chocolate is sprayed or poured on the upper surface to form the bottom of the confectionery after cooling and the filled product is finally demoulded.

When filling the shell, it is important that the centre material does not melt the chocolate. There are few problems with fondants or fat-based fillings such as pralines, which can be relatively fluid at about 30°C but one of the main difficulties with caramel is that it tends to stretch out in a tail that does not easily break under its own weight and gravity. The phenomenon is known as the "tailing" problem. This defect may consequently affect the accuracy of the dosing, weight and shape of the final moulded product. After depositing, many strings are formed across the moulds which are not hygienic and so need to be removed by cleaning. Tailing is also aesthetically unacceptable and can cause major quality defects. These defects may cause sweets to stick to each other and lead to difficulties in wrapping the product. It is necessary for the caramel to fill the shell and form a flat top, as any protruding strings or "tails" may penetrate through the chocolate base and stick to the packaging. In fact, it is impossible to put more than 1 such product in a package without the danger of the products sticking together through their protruding "tails". In addition, the chocolate also acts as a moisture barrier to stop the centre drying out and these tails provide a path for moisture transfer, which will shorten the shelf life of the product. Tailing may also cause the nozzle to clog up or block the moving parts of the device. The viscosity of caramel changes very rapidly with temperature and this means that caramel must be added as hot as possible to make it flow easily, and yet not so hot that it will melt the chocolate shell.

Past attempts to reduce tailing have consisted in physically cutting the tail. For instance, GB 2 026 378 proposes to discharge a pulse of steam or compressed air through the nozzle at the time the separation of the confectionery mass. However, these solutions have proved not to be effective, are complicated and costly to implement.

In our copending EP-A-99202075.0, we describe a method and apparatus which overcomes the problems associated with the fonnation of tail during the depositing process of a food mass in a mould, in particular by depositing a filling of confectionery mass in a mould already partly filled with other types of confectionery material. The method described for depositing a viscous or liquid food mass into a mould comprising applying a pressure to the food mass by a pressure means at a velocity which increases during the stroke of the pressure means, passing the food mass through a nozzle outlet portion of reduced diameter, and stopping the discharge of the food mass by a valve means actuating at a cut-off motion of at least 400 mm/sec.

EP-A-99202075.0 states that this method is suitable for the production of standard sized shell-moulded chocolate products with a viscous filling such as caramel. This method enables the filling to form a regular flat surface on top which has proved to be beneficial for the weight control, the final look and mouthfeel of the product and the ease of wrapping. This method also alleviates the need for additional mechanical or gas pulsing devices.

WO 01 78519 discloses a novel confectionary-based product comprising a moulded shell and a substantially planar closure base portion securely sealed onto the edges of the shell; the sealed assembly formed by the shell and the closure base portion delimiting an inner cavity, wherein the inner cavity is partially occupied with a mass formed of solid edible discrete pieces and the inner cavity comprising a free gas volume left within the cavity including at least interstitial spaces formed within the mass of the pieces.

There is, however, a desire among consumers for shell-moulded chocolate products with a viscous filling which are even smaller than bite-sized, i.e. less than 3 g in weight. Since such products ,involve the depositing of an even smaller weight of viscous centre than for a standard bite-sized product, the problem of tailing is clearly of even greater significance and up to now, it has not been possible to produce them at all by traditional methods. Surprisingly, we have found that by using the method of EP-A-99202075.0, such products may be successfully produced without any substantial tailing problems. This provides the possibility of placing a plurality of such products within a single package without the products sticking together and consequently reducing the amount of packaging material required..

Accordingly, the present invention provides a filled confectionery product having a weight less than 3g comprising a shell-moulded fat-containing confectionery material with a viscous confectionery filling

The weight of the filled confectionery product may be from 1 to 2.75g and preferably from 1.5 to 2.5g.

The fat-containing confectionery material may be, for instance, dark, milk or white chocolate. The fat containing confectionery material may also include products derived from sugar with or without milk derived components, and fat and solids from vegetable or cocoa sources in differing proportions having a moisture content less than 10%, more usually less than 5% by weight. The fat containing confectionery material may include chocolate substitutes containing direct cocoa butter replacements, stearines, coconut oil, palm oil, butter or any mixture thereof; nut pastes such as peanut butter and fat; praline; confectioner's coatings also known as compound or couvertures, used for covering ice cream or cakes usually comprising chocolate analogues with cocoa butter replaced by a cheaper non-tempering fat; or "Caramac" sold by Nestlé comprising non-cocoa butter fats, sugar and milk.

In this invention, the term "viscous" for the viscous confectionery filling, means a filling which is pumpable at the time it is deposited. It may also be flowable or pourable and may be a liquid or a semi-liquid with a minimum viscosity of 0.05Pa.s at 30°C, i.e. the viscosity of cocoa butter at 30°C. The viscosity may be of Newtonian or Non-Newtonian type.

The viscous confectionery filling may be a toffee, caramel, hydrocolloid, Turkish delight, coconut paste, yoghurt, mousse, fondant, praline, marshmallow, nougat, peanut butter, truffle, marzipan, jelly or any mixture of two or more thereof. The hydrocolloid may be a hydrocolloid such as is used to make fruit gums, wine gums and pastilles. For example, the hydrocolloid may be a functional protein, a gum, a gel, a cellulosic material, a glucan, a starch, a clay or a mixture thereof. More preferably, the hydrocolloid is a gelatin, a carrageenan, a pectin, a cellulose, an alginate, a xanthan, or a mixture thereof, and most preferably is guar gum.

The product of the present invention may be produced by the method described in EP-A-99202075.0.

Accordingly, the present invention also provides a process for the preparation of a filled confectionery product having a weight less than 3g comprising a shell-moulded fat-containing confectionery material with a viscous confectionery filling which comprises
depositing a viscous confectionery filling into a shell of a fat-containing confectionery material already within a mould by applying a pressure to the viscous confectionery filling by a pressure means at a velocity which increases during the stroke of the pressure means,
passing the viscous confectionery filling through a nozzle outlet portion of reduced diameter, and stopping the discharge of the viscous confectionery filling by a valve means actuating at a cut-off motion of at least 400 mm/sec, and
applying a layer of a fat-containing confectionery material on the upper surface of the viscous confectionery filling, cooling and finally demoulding filled confectionery product.

The present invention further provides a device for the preparation of a filled confectionery product having a weight less than 3g comprising a shell-moulded fat-containing confectionery material with a viscous confectionery filling which comprises
pressure means comprising a piston member for discharging in a stroke a viscous confectionery filling into a shell of a fat-containing confectionery material already within a mould,
means for cutting off the stroke to stop the discharge of the viscous confectionery filling including a valve means and a nozzle having an outlet portion of reduced diameter, wherein
said piston member has an operative stroke profile comprising a velocity which increases during the stroke,
said valve means moves relatively to the nozzle during cut-off and has at least a starting cut-off motion at a magnitude of at least 400 mm/sec, and
means for applying a layer of a fat-containing confectionery material on the upper surface of the viscous confectionery filling, cooling and finally demoulding filled confectionery product.

Without being necessarily bound to this theory, it is supposed that the combination of a "boosted" discharge of the viscous confectionery filling with a high-speed cut-off through a reduced diameter nozzle breaks the elastic tail.

Preferably, the velocity of the operative stroke profile increases in a ratio comprised between 2:1 to 4:1.

In a first alternative, the operative stroke profile comprises at least two sequentially distinct velocity periods. A first period has a predetermined velocity and a second period has a velocity higher than the first period. The first period corresponds to the initial deposit run and the second period corresponds to the final boost.

In a preferred embodiment, the second period represents less than 15% of the stroke, and more preferably, it is comprised between 5 to 10% of the stroke's time so as to minimise the mechanical shock/wear and to minimise the work done by the hydraulic drive fluids.

In another alternative, the operative stroke profile comprises a continuous increase of the velocity until it reaches a terminal predetermined boosted velocity.

In a preferred aspect of the invention, the outlet portion of the nozzle is sized so as to maintain a sufficient velocity of the flow of the viscous confectionery filling which so participates to the cut-off anti-tailing. In particular, its outlet portion may have a diameter less than 3mm, preferably less than 2.5 mm, and more preferably less than 2 mm. The outlet portion has also a length of less than 1.5 mm, preferably about 1 mm so as to lower the possibility of in-flight errors by reduction of hold-up in the nozzle.

In a preferable aspect of the invention, the pressure means are refilled after the depositing stage by applying a pressure sufficient to provoke the suction of the viscous confectionery filling in the pressure means until the piston member is in its ascent position. Preferably, the pressure is of at least 4 bars. A pressurised fill system has proved to be important to ensure repeatability and weight control of the moulded products.

It has been found that the production cycles can reach very high-speed levels with expected range of 10 to 40 strokes per minute, for example from 10 to 36 strokes per minute. This is possible while not affecting the piston and cut-off performance.

The present invention will now be described in further detail by way of example only with reference to the accompanying figures.
FIG. 1 is a schematic drawing of a preferred embodiment of an apparatus for carrying out the method of the present invention during the depositing cycle.
FIG. 2 is a schematic drawing of a preferred embodiment of an apparatus for carrying out the method of the present invention during the suction fill for preparing the next depositing cycle.

The apparatus of the present invention is generally identified by reference numeral 10 in the figures. The complete depositing system comprises at least a series of moulds 2 each containing a shell of a milk chocolate 3, generally attached to conveyor means (not represented). The conveyor means are intermittently moved to place a mould 2 containing a shell of a milk chocolate 3 in position under the depositing apparatus 10 after termination of each depositing cycle. After depositing the viscous confectionery filling (caramel) 7 into the shell-moulded milk chocolate 3, the filled confectionery product within the mould is moved away by the conveyor means, a layer of milk chocolate 8 is sprayed onto the the upper surface of the caramel and it is allowed to at least partly solidify, as for example, under a cooling tunnel or similar cooling means (not represented) . Then, the moulded food product is removed from the mould by inversion of the mould. If needed, ejection means are used to facilitate the removal of the food product.

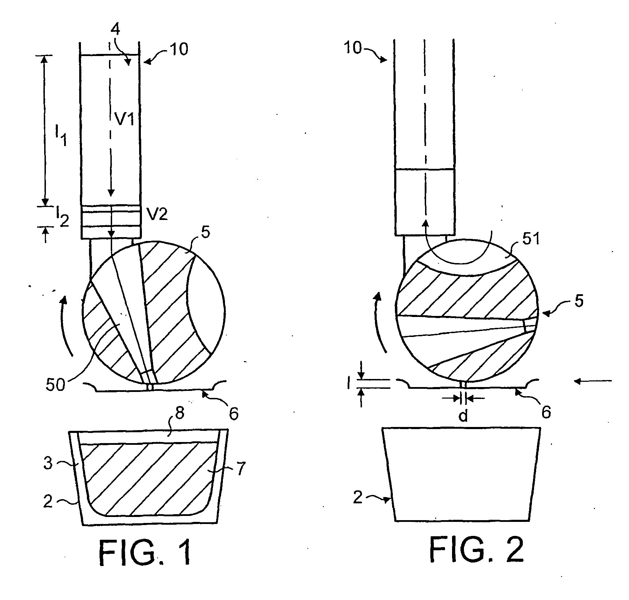

The apparatus of the invention comprises pressure means 4, generally a piston/chamber assembly, connected to a hopper for storage of a large quantity of viscous confectionery filling. A rotary valve 5, comprising a passage 50 for the viscous confectionery filling 7, is associated to the pressure means to connect the outlet of the chamber to a nozzle 6. During the deposition cycle, the rotary valve 5 is in an open configuration shown in FIG. 1. The piston is moved downwardly into the chamber to push the viscous confectionery filling contained therein toward the nozzle 6. According to one aspect of the invention, the piston is driven in accordance with an operative stroke profile which includes a first stroke length 1₁ during which the piston has a velocity V₁, and a second stroke length 12 during which the piston has a second velocity V₂. The velocity V₂ is greater than the velocity V₁. Preferably, the velocity V₂ has at least twice the magnitude of the velocity V₁. However, the velocity V₂ starts at a relatively low level of stroke of the piston, as 1₂ is preferably lower than 1₁. The stroke profile is controlled by an electronic controlling device comprising an encoder coupled to the piston means which provides feedback information to a computer.

Just before the end of the deposit stroke of the piston, the rotary valve is rotated to close the passage 50 at a very high speed. A suitable speed is at least 400 mm/sec., preferably of 500 to 1000 mm/sec. For a rotary valve, the speed is measured as the circumferential distance travelled by the valve by time unit. The timing is controlled by an electronic controlling device permitting an accurate cut-off of the valve in the order of several milliseconds. The electronic device may also comprise an encoder attached to the valve which loops back to a computer. The control of the cut off of the valve is precisely tied up to the stroke profile of the piston so as to find an optimum result on the tail reduction depending on the specific characteristic of the viscous confectionery filling to be deposited. It is possible to start the valve cutting off at the given high-speed conditions, then slowing down slightly to finish movement to the suction position of FIG. 2. At this stage, depositing of viscous confectionery filling is fully discontinued. It must be noted that the valve speed is independent of the viscosity of the viscous confectionery filling.

One of the other important aspects of the invention is the specific size outlet portion of the nozzle 6 which combined with the piston motion and the high-speed cut-off of the valve participates in the disappearance of the tail and to accuracy of the volumetric feed. The diameter or larger section d of the nozzle is less than 3 mm, preferably in the order of 1.5 mm. It must be noted that the diameter may vary depending upon the viscosity of the viscous confectionery filling to be deposited to maintain a sufficiently high cut-off velocity. The nozzle has also a length 1 sufficiently low to reduce the hold-up in the nozzle after the cut-off of the valve as shown in FIG. 2. The length 1 of the nozzle represents the distance measured between the outlet of the nozzle 6 and the outlet of the valve 5 when the passage of the valve is coaxial with the nozzle.

As shown in FIG. 2, the pressure means 4 comprising the chamber are refilled after the depositing cycle has been completed. According to another important feature of the invention, the pressure means are fed at a pressure sufficient to provoke the suction of the viscous confectionery filling into the chamber. Pressure feeding is important to ensure an accurate volumetric filling of the pressure means. For that, the rotary valve further comprises a peripheral depression 51 communicating with a source of pressurised viscous confectionery filling, preferably gas or pump pressurised (not represented). In the position illustrated in FIG. 2, where the piston is lowered and the valve cut-off, the depression 51 connects the chamber outlet of the pressure means 4 to a feed reservoir (accumulator) at a pressure of at least 4 bars, preferably at about 6 bars, dependent on viscosity and product path length, which causes a high volumetric accuracy pressurised fill during the ascent of the piston in start fill position. It has so been found that the extreme accuracy and repeatability of weights during the deposition is very dependent from the pressurised filling operation in which an accurate volumetric feed can be completed. The apparatus is ready for another deposition cycle.

Finally, a layer of fat-containing confectionery material is applied, e.g. by spraying or pouring onto the viscous confectionery filling's upper surface to form the bottom of the filled confectionery product which is then cooled and demoulded.

As an example, a filled confectionery product of 2 grams has been successfully made by the method and apparatus of the invention. The operative stroke profile was set up at approximately 0.01 grams/millisecond for the initial stroke period corresponding to stroke portion 1₁ of about 0.3mm and approximately 0.02 grams/millisecond for the terminal boost period corresponding to stroke portion 1₂ of about 5 mm. This may also be achieved with a single phase of acceleration with a stroke profile of approximately 0.02 grams/millisecond over a period of about 40 milliseconds.

While the invention has been described with regard to a specific embodiment, it should be noted that various modifications might be made without departing from the scope of the invention. For example, the valve means can also be a needle valve or a slipper valve.

## Claims

1. A filled confectionery product having a weight less than 3g comprising a shell-moulded fat-containing confectionery material with a viscous confectionery filling.

2. A filled confectionery product according to claim 1 wherein the weight of the filled confectionery product is from 1 to 2.75g.

3. A filled confectionery product according to claim 1 wherein the fat-containing confectionery material is dark, milk or white chocolate.

4. A filled confectionery product according to claim 1 wherein the fat-containing confectionery material is a product derived from sugar with or without milk derived components, and fat and solids from vegetable or cocoa sources in differing proportions having a moisture content less than 10%.

5. A filled confectionery product according to claim 1 wherein the fat containing confectionery material includes chocolate substitutes containing direct cocoa butter replacements, stearines, coconut oil, palm oil, butter or any mixture thereof.

6. A filled confectionery product according to claim 1 wherein the viscous confectionery filling is a toffee, caramel, hydrocolloid , Turkish delight, coconut paste, yoghurt, mousse, fondant, praline, marshmallow, nougat, peanut butter, truffle, marzipan, jelly or any mixture of two or more thereof.

7. A package containing a plurality of products as claimed in claim 1.

## Patentansprüche

1. Gefülltes Süßwarenprodukt mit einem Gewicht von weniger als 3 g, das ein hohlkörpergeformtes fetthaltiges Süßwarenmaterial mit einer viskosen Süßwarenfüllung umfasst.

2. Gefülltes Süßwarenprodukt nach Anspruch 1, wobei das Gewicht des gefüllten Süßwarenprodukts von 1 bis 2,75 g beträgt.

3. Gefülltes Süßwarenprodukt nach Anspruch 1, wobei das fetthalige Süßwarenmaterial dunkle, weiße oder Milchschokolade ist.

4. Gefülltes Süßwarenprodukt nach Anspruch 1, wobei das fetthaltige Süßwarenmaterial ein Produkt ist, das sich von Zucker mit oder ohne Bestandteile, die sich von Milch ableiten, sowie Fett und Feststoffen aus Pflanzen- oder Kakaoquellen in unterschiedlichen Anteilen ableitet und einen Feuchtigkeitsgehalt von weniger als 10 % aufweist.

5. Gefülltes Süßwarenprodukt nach Anspruch 1, wobei das fetthaltige Süßwarenmaterial Schokoladenaustauschstoffe beinhaltet, die direkte Kakaobutterersatzstoffe, Stearine, Kokosnussöl, Palmöl, Butter oder irgendeine Mischung davon enthalten.

6. Gefülltes Süßwarenprodukt nach Anspruch 1, wobei die viskose Süßwarenfüllung ein Toffee, Karamel, ein Hydrokolloid, Turkish delight, Kokosnusspaste, Joghurt, Mousse, Fondant, Praline, Marshmallow, Nougat, Erdnussbutter, Trüffel, Marzipan, ein Gelee oder irgendeine Mischung von zwei oder mehr davon ist.

7. Verpackung, die eine Vielzahl von Produkten, wie sie in Anspruch 1 beansprucht werden, enthält.

## Revendications

1. Produit de confiserie fourré ayant un poids inférieur à 3 g, comprenant une matière de confiserie contenant une matière grasse, moulée en coquille, avec un fourrage de confiserie visqueux.

2. Produit de confiserie fourré suivant la revendication 1, dans lequel le poids du produit de confiserie fourré est compris dans l'intervalle de 1 à 2,75 g.

3. Produit de confiserie fourré suivant la revendication 1, dans lequel la matière de confiserie contenant une matière grasse est le chocolat noir, le chocolat au lait ou le chocolat blanc.

4. Produit de confiserie fourré suivant la revendication 1, dans lequel la matière de confiserie contenant une matière grasse est un produit dérivé du sucre avec ou sans constituants dérivés du lait, et d'une matière grasse et de matières solides provenant de sources végétales ou de cacao en différentes proportions, ayant une teneur en humidité inférieure à 10 %.

5. Produit de confiserie fourré suivant la revendication 1, dans lequel la matière de confiserie contenant une matière grasse comprend des succédanés du chocolat contenant des agents de remplacement directs du beurre de cacao, des stéarines, de l'huile de copra, de l'huile de palme, du beurre ou n'importe lequel de leurs mélanges.

6. Produit de confiserie fourré suivant la revendication 1, dans lequel le fourrage de confiserie visqueux est du caramel au beurre, du caramel, un hydrocolloïde, du loukoum, une pâte de noix de coco, du yaourt, une mousse, un fondant, de la praline, de la guimauve, du nougat, du beurre d'arachide, de la truffe, du massepain, une gelée ou n'importe quel mélange de deux ou plus de deux de ces ingrédients.

7. Emballage contenant une pluralité de produits suivant la revendication 1.
